# EUROPEAN PATENT SPECIFICATION

(11) **EP 1 921 012 B1**
(45) Date of publication and mention of the grant of the patent: **07.12.2011**
(21) Application number: 07021926.6
(22) Date of filing: 12.11.2007
(51) Int. Cl.: B65D 6/04, B65D 8/04

(54) **Modular panel construction technique**
Konstruktionsverfahren für eine modulare Tafel
Technique de construction de panneaux modulaires

(30) Priority: 10.11.2006 GB 0622467
(43) Date of publication of application: 14.05.2008
(73) Proprietor: Chiu, Tak Wang, Tuen Mun, New Territories Hong Kong (CN); Chiu, Chun Kui, Tuen Mun, New Territories Hong Kong (CN)
(72) Inventor: Chiu, Tak Wang, Tuen Mun New Territories, Hong Kong (CN); Chiu, Chun Kui, Tuen Mun New Territories, Hong Kong (CN)
(74) Representative: Sessford, Russell

(56) References cited:
- DE-U1- 20 309 214
- DE-U1-202004 007 736

## Description

The present invention relates to a method of constructing objects out of modular panels or sheets of material.

Typically sheets of steel, aluminium, silver or copper between 0.3 mm and 5mm thick, known as sheet metal, have been used in the construction of the both domestic and commercial objects; for example, vases, bowls, containers, fruit bowls, work surfaces, cookers and refrigerators.

Sheet metal is generally used in the construction of such objects because it is aesthetically pleasing, is easy to clean, it is very versatile and allows a large number of different construction techniques and shaping methods to be used.

Traditional methods for shaping sheet metal include: stretching, drawing, deep drawing, bending and flanging, punching, shearing, spinning, press forming and roll forming. Although these construction techniques are well known a brief description of each is provided below:
*Stretching* is a process where a piece of sheet metal is clamped around its edges and stretched over a die or forming block.
*Drawing* involves the forming of sheet metal into cylindrical or box shaped parts using a punch to press the section of sheet metal into a die cavity.
*Deep drawing* is a method which falls within the definition of drawing but is a process wherein the depth of the part being manufactured is greater than its diameter.
*Bending and flanging* are self explanatory processes of bending a sheet of metal over a fixed tool to form an object.
*Punching and shearing* involves the removal of one section of sheet metal from another section using a punch and die.
*Spinning* is a process which is used to make objects which are symmetrical about an axis by applying a section of sheet metal to a rotating mandrill using rollers.
*Press forming* is a type of bending and is generally used for long and thin objects constructed out of sheet metal.
*Roll forming* is a continuous bending operation which results in open ended tubes of sheet metal.

In addition to the shaping techniques which are discussed above it is also often necessary to join sections of sheet metal to each other to construct more complicated objects; this is typically achieved by welding or soldering the sheets of metal together.

In order to remove dangerous or unsightly joins or edges to the sheet metal objects it is usually desirable to polish the objects and, in some instances, to de-burr the objects; if the object is complex, then polishing can be extremely difficult or, for practical purposes, impossible.

Using the construction techniques discussed above it is possible to create a large number of different objects out of sheet metal. However, it will be appreciated that these techniques are often difficult to carry out on sheet metal beyond a given thickness. Similarly, if the sheet metal is too thin some of the above process will also be difficult to utilise.

These problems are especially apparent when forming complex objects. For example, a vase comprising twelve individually formed sheets of metal which are subsequently welded together will require extensive working and, in particular, welding.

Furthermore, when applying a number of these processes the surface of the sheet metal can be damaged. As a number of the objects are decorative in nature any damage to the surfaces of the sheet metal can be detrimental to the value of the object. Processes which are required to remove any of this damage increase the expense of producing the object along with quantity of equipment which is required - for example, in some cases it is necessary to use sand or bead blasting on damaged surfaces of an object to remove the unsightly marks caused by welding or soldering; this process requires additional equipment and is labour intensive.

It will also be understood that some of these processes can only be carried out on sheet metal and other malleable materials (for example, brittle materials). It is not, for example, possible to bend sheets of slate. This limits the variety of materials that can be used to construct an object.

If a factory is equipped to manufacture objects out of sheet metal and it is discovered that there is a market for similar objects constructed out of a different material, then it is not possible to use the same factory equipment to manufacture the objects if the material is not malleable.

Document DE-A-2 750 982 discloses a container structure comprising a frame made of two pieces of mouldable material.

The present invention seeks to ameliorate the problems associated with the prior art by providing a method of constructing complex objects in a modular manner, requiring fewer complicated working steps and less raw material.

Accordingly one aspect of the present invention provides a modularly constructed container comprising: a frame formed from a single piece of mouldable material; and two or more rigid sheets of material, each having at least part of one edge embedded in the frame so that the two or more sheets of material are held in place by the frame to form a receptacle wherein the two or more sheets of material include one or more fixing holes which are at least partially filled with the mouldable material of the frame and the one or more fixing holes are through only part of an entire thickness of the sheet of material in which they are included.

Preferably, the two or more sheets of material are curved.

Preferably, the frame comprises a base section and one or more arms extending therefrom.

Advantageously, the base section includes a hole through its entire depth.

Conveniently, the one or more arms extend at an angle relative to the plane of the base section.

Preferably, the arms are of substantially equal length.

Alternatively, at least one of the arms is of a different length to the other arms.

Conveniently, the one or more of the sheets of material each have a pair of opposing edges which are embedded in respective arms of the frame.

Preferably, wherein a further edge of each of the one or more sheets of material is embedded in the base section of the frame.

Advantageously, the base section and sheets of material define a receptacle.

Conveniently, at least one of the one or more sheets of material are substantially planar.

Advantageously, at least one of the one or more sheets of material contains one or more attachment holes.

Conveniently, a further object is received by at least one of the attachment holes.

Another aspect of the present invention provides a method of manufacturing a container comprising the steps of: providing a mould having a mould body with one or more injection holes and one or more sheet receiving slots; providing two or more rigid sheets of material inserting at least part of one edge of each of the sheets of material into one or more of the sheet receiving slots; and injecting a mouldable material into the mould to form a frame so that least part of one edge of each of the sheets of material is embedded in the mouldable material of the frame to form a receptacle wherein the two or more sheets of material include one or more fixing holes which are at least partially filled with the mouldable material of the frame, the one or more fixing holes are through only part of an entire thickness of the sheet of material in which they are included, and the frame is formed from a single piece of mouldable material.

Preferably, the step of inserting comprises clamping the mould around the at least part of one edge of each of the sheets of material.

Preferably, the step of providing two or more rigid sheets of material comprises providing two or more curved sheets of material.

Conveniently, the frame has a base section and one or more arms extending therefrom.

Preferably, the basse section includes a hole through its entire depth.

Preferably, the frame with one or more arms extend at an angle relative to the plane of the base section.

Conveniently, the arms are of substantially equal length.

Preferably, at least one of the arms is of a different length to the other arms.

Advantageously, the two or more of the sheets of material each have a pair of opposing edges which are embedded in respective arms of the frame.

Conveniently, a further edge of each of the two or more sheets of material is embedded in the base section of the frame.

Preferably, the base section and sheets of material define a receptacle.

Preferably, the step of providing two or more sheets of material comprises the step of providing at least one sheet of sheet metal.

Conveniently, the step of providing two or more sheets of material comprises the step of providing at least one sheet of a plastic material.

Advantageously, the step of providing two or more sheets of material comprises the step of providing at least one sheet of slate.

Preferably, the step of providing two or more sheets of material comprises the step of providing at least one planar sheet of material.

Conveniently, the step of providing two or more sheets of rigid material comprises the step of providing at least one of the two or more sheets of material having a depth of 0.3 mm to 5mm.

In order that the present invention may be more readily understood, embodiments thereof shall be described, by way of example, with reference to the accompanying drawings in which:
Figures 1 shows a prior art fruit bowl;
Figures 2a and 2b show an embodiment of the present invention comprising a fruit bowl of similar style to the prior art fruit bowl shown in Figure 1;
Figure 3 shows an embodiment of the present invention in which the manufacturing method has been applied to a first type of bowl;
Figure 4 shows an embodiment of the present invention in which the method has been applied to a second type of bowl;
Figure 5 shows an embodiment of the present invention comprising a first type of vase constructed using the inventive method;
Figure 6 shows an embodiment of the present invention comprising a second type of vase constructed using the inventive method; and
Figure 7 shows an embodiment of the present invention comprising a third type of vase having an upper and a lower section, each section having been constructed using the inventive method.

One embodiment of the present invention comprises a method of manufacturing an object out of modular sections of material secured together using a frame of plastic material. Another embodiment of the present invention comprises an object manufactured according to the aforementioned method.

So that the present invention may be more readily understood, embodiments thereof will be described in relation to the manufacture of a fruit bowl. However, it will be appreciated that this is just one example of an object to which the invention has been applied.

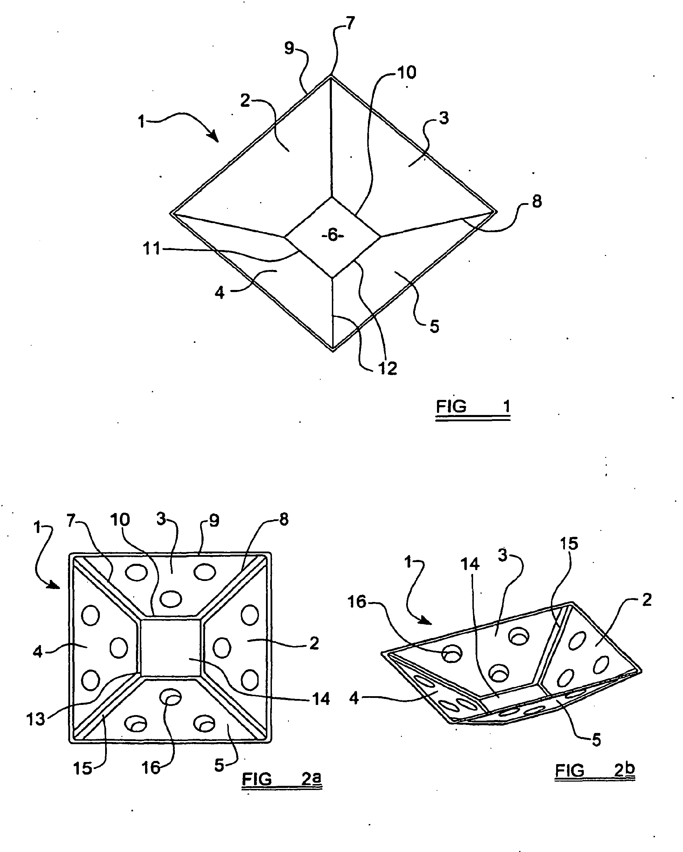

Referring to Figure 1, this figure shows a fruit bowl 1 constructed out of sheet metal according to the prior art methods. The fruit bowl 1 comprises five separate sheets of sheet metal 2-6: four of the sheet metal sheets are truncated triangular shaped sections of sheet metal 2-5; the fifth sheet metal sheet 6 is a square shaped section of sheet metal.

Each sheet of sheet metal 2-6 preferably has a thickness between 0.3 mm and 5mm thick. Advantageously, each sheet of sheet metal 2-6 has a thickness between 0.3 mm and 3.5mm.

Each of the truncated triangular sections 2-5 has two angled side edges 7,8 which extend from a long base edge 9 to a short top edge 10 - the short top edge 10 being the edge along which the triangle has been truncated. The length of the short top edge 10 is substantially equal to the length of one of the sides 11 of the square section 6 of sheet metal of the prior art bowl 1 described above.

During the construction of a fruit bowl 1 according to the prior art methods the five sheets of sheet metal 2-6 are welded together such that each of the four truncated triangular sections 2-5 are each secured to a respective edge 11 of the square sheet 6 along their short top edges 10. Each triangular section 2-5 is also secured, by welding or soldering, to two of the other truncated triangular sections 2-5 - one along each of the angled side edges 7,8; thus forming a shallow bowl 1.

Any of the welded joints 12 which may be visible to the end user must be polished and subjected to other treatments in order to maintain their aesthetic appearance and to remove any sharp or dangerous burrs.

A fruit bowl 1 constructed according to an embodiment of the present invention is shown in figure 2.

The fruit bowl 1 shown in figure 2 comprises four truncated triangular sheets 2-5 of metal which are generally of the same dimensions as the truncated triangular sheets 2-5 of the fruit bowl 1 of the prior art (as shown in figure 1). Along each angled side 7,8 of the truncated triangular sheets 2-5, close to the angled side edges 7,8 thereof, are one or more fixing holes (not shown) which extend through the entire thickness of the truncated triangular sheet 2-5.

Preferably, there are four or more such fixing holes on each side of the angled sides of each sheet 2-5. One or more similar fixing holes (not shown) extend through the entire thickness of the triangular sheet 2-5 near the short top edge 10 thereof. It will be appreciated that in other embodiments of the present invention the fixing holes need not go through an entire depth of the sheet of material 2-5. Indeed, the fixing holes could comprise one or more etched or embossed lines or shapes in the surface of the sheet of material 2-5.

A frame 13 of plastic material is provided comprising a substantially square base section 14 with four elongate plastic arms 15 extending radially away from the base section 14 from each corner thereof. Each of the arms 15 extend at the same angle of elevation away from the plane of the base section 14. The space defined between each arm 15, one of the adjacent arms 15, and the square base section 14 of the frame 13 is generally the same shape as, but smaller than, one of the truncated triangular sheets 2-5.

The frame 13 is preferably manufactured out of thermoplastic material. It will be appreciated that a large number of different colour and texture variations can be achieved by utilising different materials for construction of the frame 13 or varying additives which are incorporated into the material used to construct the frame 13. Materials other than plastics can be used in the construction of objects in accordance with the present invention. In particular, it may be necessary to alter the material of the frame 13 in order to suit the nature of the sheets of material 2-5 being held by the frame 13.

The frame 13 and truncated triangular sheets 2-5 are secured together such that three edges 7,8,10 of each of the truncated triangular sheets 2-5 are embedded in the frame 13, the short top edge 10 thereof being embedded in the square base section 14, and each angled side edge 7,8 being embedded in a different arm 15 of the frame 13.

In other words, the frame 13 has a first, a second, a third and a fourth arm 15; the first and second arms 15 extend from opposing corners of the square base 14 section, one from each end of a first edge of the square base section 14. Similarly, the second and third arms 15 of the frame 13 extend from opposing corners of the square base section 14, one from each end of a second edge of the base section 14. As will be appreciated, there are thus four edges of the square base section 14 and at the ends of each edge, an arm 15 extends. A first truncated triangular sheet 2 is embedded in the frame 13 such that a first angled side edge 7 thereof is embedded in the first arm 15 of the frame 13 and a second angled side edge 8 thereof is embedded in the second arm 15 of the frame 13. The short top edge 10 of the first truncated triangular sheet 2 is embedded in the first edge of the square base section 14 of the frame 13. This construction is repeated around the frame 13 with a second truncated triangular sheet 3 being embedded in the second and third arms 15 of the frame 13 and the second edge of the square base section 14, and so on.

The truncated triangular sheets 2-5 are embedded in the plastic to the extent that the fixing holes which extend through the depth thereof are at least partially filled with the plastic of the frame 13.

It will be appreciated that all edges of the truncated triangular sheets 2-5 may be embedded in the frame 13 and that the disparate ends of the arms may be linked together by further arms.

Thus, a fruit bowl 1 can be formed with a minimum amount of welding, polishing and de-burring of the individual sheets of metal which are used in its construction (all of which are complicated and expensive processes).

It will be appreciated that the present invention can be utilised to manufacture a large number of different objects that would have previously been constructed out of sheets of material. Indeed, the present invention allows alternative materials to be used to manufacture such objects that would not have previously been considered; for example, slate. The alternative materials also include materials which are difficult to work, of a high value, or difficult to secure to other materials.

Materials which would otherwise be difficult to work can be used, in accordance with the present invention, to construct objects because the present invention negates the need for complicated working processes. Similarly, materials which are expensive and would normally be too easily damaged by prior construction techniques can now be used to construct objects utilising the present invention.

The sheets of material are preferably rigid but it is envisaged that the objects may be made having sheets of non-rigid material, for instance canvas, paper or flexible plastic, if the supporting frame is sufficiently strong.

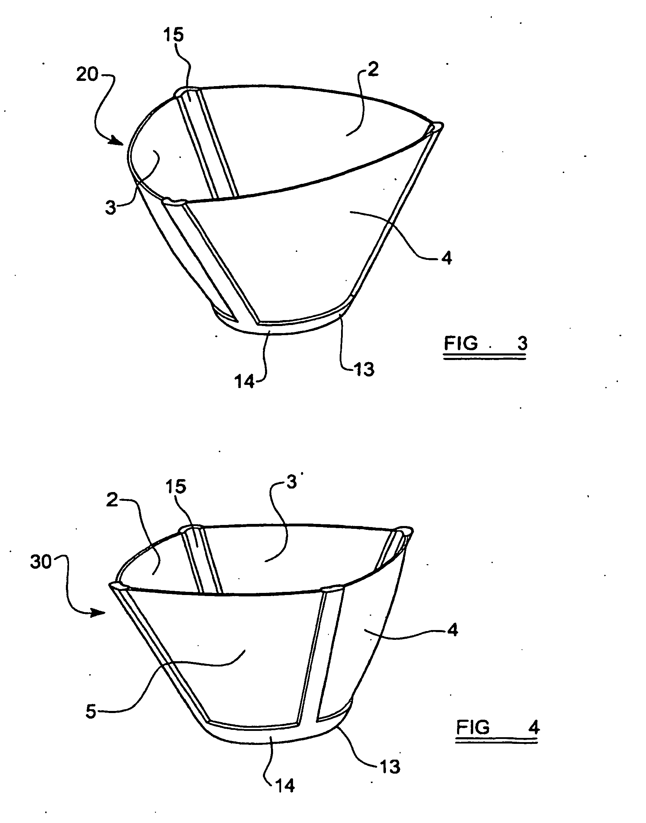

Examples of other objects which can be constructed in accordance with the present invention are shown in figures 3 to 6.

Figure 3 shows a first type of bowl 20 comprising a frame 13 with three arms 15, and three sheets of material 2-4. Each sheet of material 2-4 is curved and embedded in the frame 13 along three edges.

Figure 4 shows a second type of bowl 30 similar to the first type of bowl 20 but having a frame 13 with four arms 15, and four sheets of material 2-5.

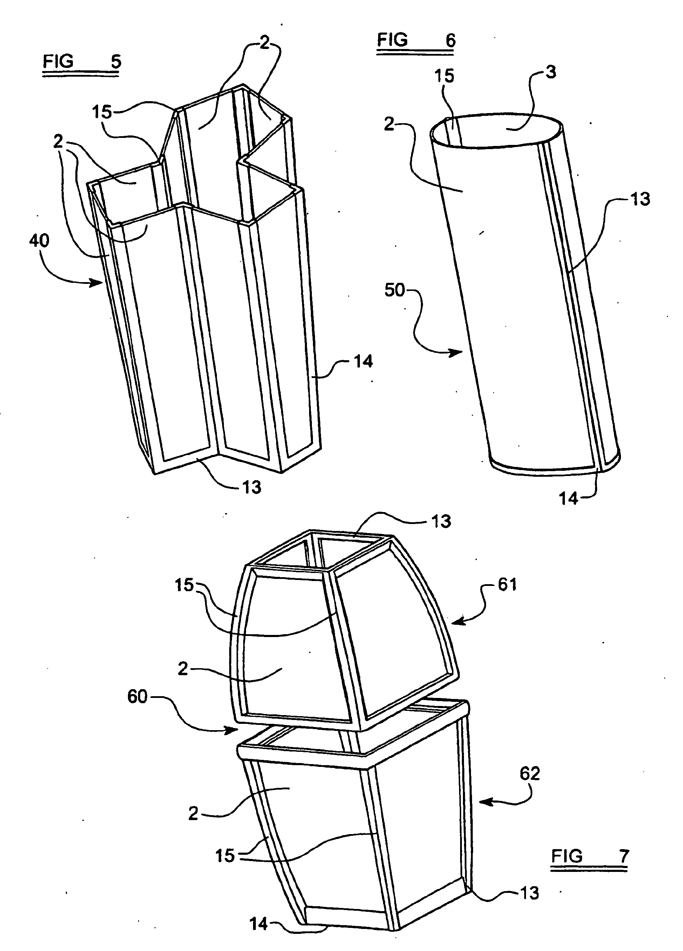

Figure 5 shows a first type of vase 40 comprising a frame 13 and a number of generally rectangular sheets of material 2. The sheets 2 and frame 13 are arranged to form a vase 40 with a large number of side surfaces. It will be understood that prior methods of constructing such an object would require large amounts of welding, polishing and sand-blasting. All of these processes are expensive and require specialist equipment.

Figure 6 shows a second type of vase 50 with a frame 13 having two arms 15 and two sheets 2,3 of material. The sheets 2,3 of material are embedded in the frame 13 and curve to form a receptacle.

Figure 7 shows a third type of vase 60 having and upper 61 and a lower 62 portion. Both portions 61,62 are constructed in accordance with the present invention. The upper portion 61 is detachable from the lower portion 62 and both portions can be used separately or, when attached to each other, as one vase 60.

In some embodiments of the present invention there are one or more attachment holes (not shown) in each of the truncated triangular sheets 2-5. These attachment holes can be used to attach various other objects 16 and features to the truncated triangular sections 2-5. For example, in the case o the fruit bowl 1, the attachment holes could be used to secure rubber pads 16 to the truncated triangular sheets 2-5. These rubber pads 16 provide additional friction between the fruit bowl 1 and any fruit (not shown) held therein; this can prevent the fruit from excessive movement within the bowl 1 or prevent the fruit from falling out of the bowl 1 when the bowl is, for example moved. The other objects 16 and features 16 could include ornaments.

In some embodiments of the invention, one or more of the attachment holes (not shown) extend through an entire depth of the sheet of material 2-5. However, the one or more of the attachment holes could comprise an etched or embossed line or shape in the surface of the truncated triangular sheets 2-5 - the embossed or etched line or shape being suitable to allow one or more objects 16 to be attached to the truncated triangular sheets 2-5.

In the example of rubber pads 16 the attachment holes can be round and can extend through the entire depth of the truncated triangular sheet 2-5. Each rubber pad 16 can comprise a piece of rubber of circular cross-section. The piece of rubber comprises three parts: two outer cushions and a central column connecting the two cushions - the diameter of the two outer cushions being larger than that of the column and generally large than the diameter of the attachment hole. The diameter of the column is generally equal to the diameter of the attachment hole. In order to attach a rubber pad 16 to an attachment hole the rubber pad 16 can be placed over the attachment hole such that one of the cushions (the first cushion) rests on the area of the truncate triangular sheet 2-5 surrounding the attachment hole. Pressure can then be applied to the opposing cushion (the second cushion) in a direction such that the first cushion is forced through the attachment hole. Thus, the first cushion of the pad 16 is on one side of the sheet 2-5 and the second cushion is on the other side of the sheet 2-5 with the column section of the pad 16 being within the attachment hole. It will be appreciated that a secure fitting can be achieved by using a pad 16 which has a column with a height which is substantially equal to the depth of the sheet 2-5.

Embodiments of the present invention include methods of manufacturing objects such as the fruit bowl 1 discussed above. For the sake of simplicity an embodiment of the present invention comprising a method of manufacturing an object will be described in relation to the fruit bowl 1 of the above embodiment of the present invention.

The truncated triangular sheets 2-5, as described above, are heated to a temperature which is substantially the same as the melting temperature of the thermoplastic material used to construct the frame 13.

The truncated triangular sheets 2-5 are subsequently pressed into the frame 13, which softens upon contact with the metal of the truncated triangular sheets 2-5. The angled side edges 7,8 of the truncated triangular sheets 2-5 are pressed into two adjacent arms 15 of the frame 13. Contemporaneously, the short top edge 10 of each of the truncated triangular sheets 2-5 is pressed into a side edge of the square base section 14.

The truncated triangular sheets 2-5 are, thus, pressed into the frame 15 until the fixing holes which extend through the depth of the truncated triangular sections 2-5 are within the frame 15. Preferably, the truncated triangular sheets 2-5 are immovably embedded in the frame 15.

The truncated sheets 2-5 and frame 15 are then left to cool and the thermoplastic of the frame 15 to harden.

It will be appreciated that other embodiments of the present invention include methods of manufacturing an object by other methods. For example, in the case of a fruit bowl 1, the truncated triangular sections 2-5 can be clamped in a fixed position relative to each other in the relative positions which they have in the completed fruit bowl 1. A mould (not shown) is clamped around the adjacent edges 7,8 of the truncated triangular sections 2-5 and around the square base area which is defined by the short top edges 10 of all four of the truncated triangular sections 2-5. Subsequently a plastic is injected into the mould thus securing the truncated triangular sheets 2-5 together.

In other embodiments of the present invention a mould is provided. The mould comprises a mould body having one or more injection holes and one or more sheet receiving slots. One or more sheets of material 2-5 are inserted into one or more of the sheet receiving slots such that at least part of one edge of each sheet 2-5 is within the mould body. A plastic material may then be injected into the mould body through the one or more injection holes. The plastic material will, thus, flow into the mould and any edges of sheets 2-5 which are within the mould body will be embedded in the plastic material. The plastic material can be allowed to set at least partially and the mould then removed. If necessary further setting processes can be applied to the object to set the frame 13 of plastic material. It may be necessary to clamp the sheets of material 2-5 in a fixed position with respect to the mould.

Although the embodiments of the invention which have been described above recite the use of thermoplastic, it will be appreciated that some embodiments of the present invention could utilise other types of plastic - such as thermosetting plastic.

Although the frames 13 discussed above are described as constructed from a plastic material, it will be understood that the frames 13 could equally be constructed out of any mouldable material. Indeed, the frames 13 which are used in the construction of objects according to the present invention can be manufactured out of any suitable mouldable material including: general purpose polystyrene (GPPS), high impact polystyrene (HIPS), acrylonitrile butadiene styrene (ABS), acrylonitrile styrene (SAN), butadiene styrene (BDS), methly-methacrylate styrene (MS), polymethly methacrylate (PMMA), polypropylene (PP), high-density polyethylene (HDPE), polyvinyl chloride (PVC), cellulose acetate (CA), cellulose nitrate (CN), polyethylene terephthalate (PETG), polyamide-6 (PA-6), polycarbonate (PC), polycarbonate+ABS (PC/ABS), polyacetal (POM), polythalamide (PPA), polyphenylene sulphide (PPS), styrenic block copolymer (SBS), polyolefin elastomers (POE), thermoplastic polyurethanes (TPU), Thermoplastic polytheramide (TPEA), thermoplastic olefins blends (TPO), ABS-FR, ABD-HH, PBT, PET, TPE, copper, silver, steel, stainless steel, aluminium, and gold, among others.

For the avoidance of doubt, references to a "mouldable material" include references to materials which are capable of being moulded (for example, when they are heated) and which, after moulding, are sufficiently stiff and viscous to hold a substantially fixed shape; of course, some flexibility in the frame may be advantageous.

In some embodiments of the present invention, the frame 13 may be constructed out of a single piece of mouldable material.

As previously mentioned the above description of embodiments of the present invention relate to a fruit bowl 1 and methods of its manufacture. The present invention is, however, not limited to the production of fruit bowls 1. Indeed, embodiments of the present invention include general modular construction methods using a frame and sheets of material. These methods can be applied to a large number of different objects which do not merely include household objects such as the vases and bowls shown in the figures (see figures 3 to 7); other objects to which the present invention is equally applicable include work surfaces, refrigerators, cases, computer cases, speaker cases, lamps and the like.

The present invention is not limited to the construction of objects out of truncated triangular sheets of material; indeed, any shape of sheet material may be used in accordance with embodiments of the invention. Furthermore, the sheets of material can be processed prior to or after they are embedded in the frame; for example, the sheet material can be bent into a particular shape, polished, etched or painted. Preferably, polishing is carried out before the sheets are embedded in the frame. Advantageously, etching of the sheets of material is carried out after they have been embedded into the frame.

Although in the example of a fruit bowl 1 which has been given above, the base of the fruit bowl 1 was formed from a square base section 14 of the frame 13, it will be appreciated that this need not be the case. In particular, the base section 14 of the frame 13 could comprise a square section of plastic material with a hole through the entire depth thereof. A sheet of material could be embedded in the base section 14 to substantially or partially cover the hole therethrough.

It will be appreciated that the arms 15 of the frame 13 can be of different lengths, and extend away from the base section 14 of the frame 13 at different angles of elevation and take any desired arrangement of distribution around the base section 14.

It will be appreciated that it is only necessary for part of one edge of a sheet of material to be embedded in the frame 13 for the sheet of material to be immovable with respect to the frame 13.

It will be understood that "stock" frames 13 can be manufactured for use in the construction of a particular object. The stock frames 13 can then be used in conjunction with sheets of a number of different materials in order to manufacture a variety of different products of the same generic type. Indeed, it will be understood that more than one type of sheet material can be used in conjunction with a single frame 13.

Preferably, the frame 13 is manufactured with one or more grooves or ridges which act as a guide of the embedding of one or more sheets or material therein.

It will be appreciated that embodiments of the present invention can be used to form modularly constructed objects using thinner sheets of raw material with fewer difficult processing steps - thus, reducing the overall manufacturing costs for producing the objects.

Within the context of the present invention, the term "embedded" may be defined as the moulding of a first material around at least a portion of, for example, a sheet of material. Specifically, the definition of the term should be distinguished from the sandwiching of a sheet of material between two portions of a first material.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A modularly constructed container (1) comprising:
a frame (13) formed from a single piece of mouldable material; and
two or more rigid sheets of material (2-6), each having at least part of one edge embedded in the frame (13) so that the two or more sheets of material (2-6) are held in place by the frame (13) to form a receptacle (1), wherein the two or more sheets of material (2-6) include one or more fixing holes which are at least partially filled with the mouldable material of the frame (13) and the one or more fixing holes are through only part of an entire thickness of the sheet of material (2-6) in which they are included.

2. A container (1) according to Claim 1, wherein the two or more sheets of material (2-6) are curved.

3. A container (1) according to any preceding claim, wherein the frame (13) comprises a base section (14) and one or more arms (15) extending therefrom.

4. A container (1) according to Claim 3, wherein the base section (14) includes a hole through its entire depth.

5. A container (1) according to Claim 3 or 4, wherein the one or more arms (15) extend at an angle relative to the plane of the base section (14).

6. A container (1) according to any one of claims 3 to 5, wherein the arms (15) are of substantially equal length.

7. A container (1) according to any one of claims 3 to 5, wherein at least one of the arms (15) is of a different length to the other arms (15).

8. A container (1) according to any one of claims 3 to 7, wherein the two or more of the sheets of material (2-6) each have a pair of opposing edges which are embedded in respective arms (15) of the frame (13).

9. A container (1) according to Claim 8, wherein a further edge of each of the two or more sheets of material (2-6) is embedded in the base section (14) of the frame (13).

10. A container (1) according to claim 8 or 9 wherein the base section (14) and sheets of material (2-6) define a receptacle (1).

11. A container (1) according to any preceding claim, wherein at least one of the two or more sheets of material (2-6) are substantially planar.

12. A container (1) according to any preceding claim, wherein at least one of the one or more sheets of material (2-6) contains one or more attachment holes.

13. A container (1) according to Claim 12, wherein a further object (16) is received by at least one of the attachment holes.

14. A method of manufacturing a container (1) comprising the steps of:
providing a mould having a mould body with one or more injection holes and one or more sheet receiving slots;
providing two or more rigid sheets of material (2-6);
inserting at least part of one edge of each of the sheets of material (2-6) into one or more of the sheet receiving slots; and
injecting a mouldable material into the mould to form a frame (13) so that least part of one edge of each of the sheets of material (2-6) is embedded in the mouldable material of the frame (13) to form a receptacle (1) wherein the two or more sheets of material (2-6) include one or more fixing holes which are at least partially filled with the mouldable material of the frame (13), the one or more fixing holes are through only part of an entire thickness of the sheet of material (2-6) in which they are included, and the frame is formed from a single piece of mouldable material.

15. A method according to claim 14, wherein the step of inserting comprises clamping the mould around the at least part of one edge of each of the sheets of material.

## Patentansprüche

1. Modular aufgebauter Behälter (1), umfassend:
einen Rahmen (13), der aus einem einzigen Stück formbaren Materials ausgebildet ist; sowie zwei oder mehr starre Werkstoffbleche (2-6), wobei die jeweils zumindest einen Teil einer Kante aufweisen, die im Rahmen (13) eingebettet ist, so dass die zwei oder mehr Werkstoffbleche (2-6) von dem Rahmen (13) festgehalten werden, um ein Gefäß (1) zu bilden, wobei die zwei oder mehr Werkstoffbleche (2-6) ein oder mehrere Befestigungslöcher einschließen, die zumindest teilweise mit dem formbaren Material des Rahmens (13) gefüllt sind, und die zwei oder mehreren Befestigungslöcher nur durch einen Teil der Gesamtdicke des Werkstoffblechs (2-6) führen, in dem sie eingeschlossen sind.

2. Behälter (1) nach Anspruch 1, wobei die zwei oder mehr Werkstoffbleche (2-6) gebogen sind.

3. Behälter (1) nach irgendeinem vorhergehenden Anspruch, wobei der Rahmen (13) einen Basisabschnitt (14) und einen oder mehrere von demselben sich erstreckende Arme (15) umfasst.

4. Behälter (1) nach Anspruch 3, wobei der Basisabschnitt (14) ein Loch durch seine gesamte Tiefe einschließt.

5. Behälter (1) nach Anspruch 3 oder 4, wobei der eine oder die mehreren Arme (15) sich in einem Winkel relativ zur Ebene des Basisabschnitts (14) erstrecken.

6. Behälter (1) nach irgendeinem der Ansprüche 3 bis 5, wobei die Arme (15) von im Wesentlichen gleicher Länge sind.

7. Behälter (1) nach irgendeinem der Ansprüche 3 bis 5, wobei zumindest einer der Arme (15) von unterschiedlicher Länge zu den anderen Armen (15) ist.

8. Behälter (1) nach irgendeinem der Ansprüche 3 bis 7, wobei die zwei oder mehr Werkstoffbleche (2-6) jeweils ein Paar gegenüberliegender Kanten aufweisen, die in jeweiligen Armen (15) des Rahmens (13) eingebettet sind.

9. Behälter (1) nach Anspruch 8, wobei eine weitere Kante von jedem der zwei oder mehr Werkstoffbleche (2-6) im Basisabschnitt (14) des Rahmens (13) eingebettet ist.

10. Behälter (1) nach Anspruch 8 oder 9, wobei der Basisabschnitt (14) und die Werkstoffbleche (2-6) ein Gefäß (1) begrenzen.

11. Behälter (1) nach irgendeinem vorhergehenden Anspruch, wobei zumindest eines der zwei oder mehr Werkstoffbleche (2-6) im Wesentlichen plan sind.

12. Behälter (1) nach irgendeinem vorhergehenden Anspruch, wobei zumindest eines der einen oder mehr Werkstoffbleche (2-6) ein oder mehrere Anbringungslöcher enthält.

13. Behälter (1) nach Anspruch 12, wobei ein weiterer Gegenstand (16) von zumindest einem der Anbringungslöcher aufgenommen ist.

14. Verfahren zur Herstellung eines Behälters (1), umfassend die folgenden Schritte:
Vorsehen einer Form, die einen Formkörper mit einem oder mehreren Einspritzlöchern und einem oder mehreren blechaufnehmenden Schlitzen aufweist;
Bereitstellen von zwei oder mehr starren Werkstoffblechen (2-6);
Einfügen zumindest eines Teils einer Kante von jedem der Werkstoffbleche (2-6) in einen oder mehrere der blechaufnehmenden Schlitze; und
Einspritzen eines formbaren Materials in die Form zur Ausbildung eines Rahmens (13), so dass zumindest ein Teil einer Kante von jedem der Werkstoffbleche (2-6) in das formbare Material des Rahmens (13) eingebettet ist, um ein Gefäß (1) zu bilden, wobei die zwei oder mehr Werkstoffbleche (2-6) ein oder mehrere Befestigungslöcher einschließen, die zumindest teilweise mit dem formbaren Material des Rahmens (13) gefüllt sind, das eine oder die mehreren Befestigungslöcher nur durch einen Teil der Gesamtdicke des Werkstoffblechs (2-6) führen, in dem sie eingeschlossen sind, und der Rahmen aus einem einzigen Stück formbaren Materials ausgebildet wird.

15. Verfahren nach Anspruch 14, wobei der Schritt des Einfügens das Festklemmen der Form rund um den zumindest einen Teil einer Kante von jedem der Werkstoffbleche umfasst.

## Revendications

1. Un récipient de construction modulaire (1) se composant de ce qui suit :
un cadre (13) formé d'une seule pièce de matériau de moulage ; et deux feuilles rigides de matériau ou plus (2-6) ayant chacune au moins une partie d'un bord incrustée dans le cadre (13) de manière telle que les deux feuilles de matériau ou plus (2-6) soient maintenues en place par le cadre (13) de façon à former un réceptacle (1), dans lequel les feuilles de matériau (2-6) comportent un ou plusieurs trous de fixation qui sont au moins en partie remplis de matériau de moulage du cadre (13) et le ou les trous de fixation traversent uniquement une partie de toute l'épaisseur de la feuille de matériau (2-6) dans laquelle ils sont formés.

2. Un récipient (1) selon la revendication 1, dans lequel les feuilles de matériau (2-6) sont incurvées.

3. Un récipient (1) selon n'importe laquelle des revendications précédentes, dans lequel le cadre (13) comporte une section de base (14) dont partent un ou plusieurs bras (15).

4. Un récipient (1) selon la revendication 3, dans lequel la section de base (14) comporte un trou sur toute sa profondeur.

5. Un récipient (1) selon la revendication 3 ou 4, dans lequel le ou les bras (15) partent en biais par rapport au plan de la section de base (14).

6. Un récipient (1) selon n'importe laquelle des revendications 3 à 5, dans lequel les bras (15) sont pour l'essentiel de même longueur.

7. Un récipient (1) selon n'importe laquelle des revendications 3 à 5, dans lequel au moins un des bras (15) n'est pas de la même longueur que les autres bras (15).

8. Un récipient (1) selon n'importe laquelle des revendications 3 à 7, dans lequel les feuilles de matériau (2-6) possèdent chacune une paire de bords opposés qui sont intégrés aux bras respectifs (15) du cadre (13).

9. Un récipient (1) selon la revendication 8, dans lequel un autre bord de chacune des feuilles de matériau (2-6) est intégré à la section de base (14) du cadre (13).

10. Un récipient (1) selon la revendication 8 ou 9, dans lequel la section de base (14) et les feuilles de matériau (2-6) définissent un réceptacle (1).

11. Un récipient (1) selon n'importe laquelle des revendications précédentes, dans lequel au moins une des feuilles de matériau (2-6) est pour l'essentiel planaire.

12. Un récipient (1) selon n'importe laquelle des revendications précédentes, dans lequel au moins une des feuilles de matériau (2-6) contient au moins un trou de fixation.

13. Un récipient (1) selon la revendication 12, dans lequel un autre objet (16) est reçu par au moins un des trous de fixation.

14. Un procédé de fabrication d'un récipient (1) se composant des opérations suivantes:
se procurer un moule dont le corps possède au moins un trou d'injection et au moins une fente de réception de feuille;
se procurer au moins deux feuilles rigides de matériau (2-6) ;
insérer au moins une partie d'un bord de chacune des feuilles de matériau (2-6) dans une ou plusieurs des fentes de réception de feuille ; et
injecter un matériau de moulage dans le moule pour former un cadre (13) de façon à ce qu'au moins une partie d'un bord de chacune des feuilles de matériau (2-6) soit incrustée dans le matériau de moulage du cadre (13) pour former un réceptacle (1) dans lequel les feuilles de matériau (2-6) comportent au moins un trou de fixation au moins en partie rempli de matériau de moulage du cadre (13), le ou les trous de fixation ne traversent qu'une partie de toute l'épaisseur de la feuille de matériau (2-6) dans laquelle ils sont formés et le cadre est formé à partir d'une seule pièce de matériau de moulage.

15. Un procédé selon la revendication 14, dans lequel l'opération d'insertion suppose de fixer le moule autour d'au moins une partie d'un bord de chacune des feuilles de matériau.
